# EUROPEAN PATENT APPLICATION

(11) **EP 4 509 401 A2**
(43) Date of publication of application: **19.02.2025**
(21) Application number: 24194337.2
(22) Date of filing: 13.08.2024
(51) Int. Cl.: B64C 1/40, B64U 20/20

(54) **AERIAL VEHICLE WITH ENHANCED SOUND ATTENUATION**

(30) Priority: 18.08.2023 US 202318235549
(71) Applicant: Rohr, Inc., Chula Vista, CA 91910-2098 (US)
(72) Inventor: CHIEN, Wentaur E., San Diego, 92130 (US)
(74) Representative: Dehns

(57) **Abstract**

An aerial vehicle (20) is provided which includes a propulsion unit (24) and an airframe (22). The airframe (22) includes a fuselage (26), a pylon (28) and an acoustic panel (36). The pylon (28) mounts the propulsion unit (24) to the fuselage (26). The acoustic panel (36) forms an exterior surface (38) of the airframe (22). The acoustic panel (36) is configured to attenuate sound propagating outside of the aerial vehicle (20).

## Description

### BACKGROUND

### 1. Technical Field

This disclosure relates generally to an aerial vehicle and, more particularly, to sound attenuation for the aerial vehicle.

### 2. Background Information

Various types of aerial vehicles are being developed such as advanced air mobility (AAM) vehicles and unmanned aerial vehicles (UAVs). These aerial vehicles may face various challenges, particularly related to noise production. There is a need in the art for enhanced noise attenuation for aerial vehicles such as, but not limited to, the advanced air mobility vehicles and the unmanned aerial vehicles.

### SUMMARY OF THE DISCLOSURE

According to an aspect of the present disclosure, an aerial vehicle is provided which includes a propulsion unit and an airframe. The airframe includes a fuselage, a pylon and an acoustic panel. The pylon mounts the propulsion unit to the fuselage. The acoustic panel forms an exterior surface of the airframe. The acoustic panel is configured to attenuate sound propagating outside of the aerial vehicle.

According to another aspect of the present disclosure, another aerial vehicle is provided which includes a propulsion unit and an airframe. The airframe includes a fuselage and a pylon. The fuselage includes an acoustic panel forming an exterior surface of the fuselage. The acoustic panel is configured to attenuate sound propagating outside of the aerial vehicle. The pylon mounts the propulsion unit to the airframe.

According to still another aspect of the present disclosure, another aerial vehicle is provided which includes a propulsion unit and an airframe. The airframe includes a fuselage, a pylon and a protective film forming an exterior surface of the airframe. The protective film is configured from or otherwise includes (a) polyurethane or (b) tetrafluoroethylene, hexafluoropropylene and vinylidene fluoride. The pylon mounts the propulsion unit to the airframe.

The protective film may include a plurality of film perforations which extend through the protective film. The film perforations include a first film perforation. The first film perforation may have a width less than 0.015 inches (0.381mm).

The airframe may also include an acoustic panel. The acoustic panel may include the protective film.

The acoustic panel may include a plurality of internal cavities and a plurality of perforations fluidly coupling an environment outside of the aerial vehicle with the internal cavities. The perforations include a first perforation. The first perforation may have a width less than 0.015 inches (0.381mm).

The aerial vehicle may be configured as an advanced air mobility vehicle.

The aerial vehicle may be configured as an unmanned aerial vehicle.

The fuselage may include the acoustic panel.

The exterior surface may be arranged at a top of the fuselage.

The exterior surface may be arranged at a side and/or an end of the fuselage.

The pylon may include the acoustic panel.

The acoustic panel may include a face skin, a back skin and a cellular core between the perforated face skin and the back skin. The face skin may include a plurality of face skin perforations which extend through the face skin and are fluidly coupled with a plurality of cavities within the cellular core.

The face skin may form the exterior surface of the airframe.

The face skin perforations include a first face skin perforation. The first face skin perforation may have a width less than 0.015 inches (0.381mm).

The acoustic panel may also include a film over the face skin. The film may include a plurality of film perforations which extend through the film. The film perforations include a first film perforation. The cavities include a first cavity. The face skin perforations include a first face skin perforation. The first face skin perforation may fluidly couple the first film perforation to the first cavity.

The film perforations may also include a second film perforation. The first face skin perforation may also fluidly couple the second film perforation to the first cavity.

The first film perforation may have a width less than 0.015 inches (0.381mm).

The first face skin perforation may have a width between 0.02 inches (0.508mm) and 0.06 inches (1.524mm).

The film may be configured from or otherwise include polyurethane.

The film may be configured from or otherwise include tetrafluoroethylene, hexafluoropropylene and vinylidene fluoride.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a perspective illustration of an aerial vehicle.
FIG. 2 is a perspective cutaway illustration of an acoustic panel.
FIG. 3 is a side sectional illustration of the acoustic panel.
FIG. 4 is a side sectional illustration of the acoustic panel further configured with a perforated film.

### DETAILED DESCRIPTION

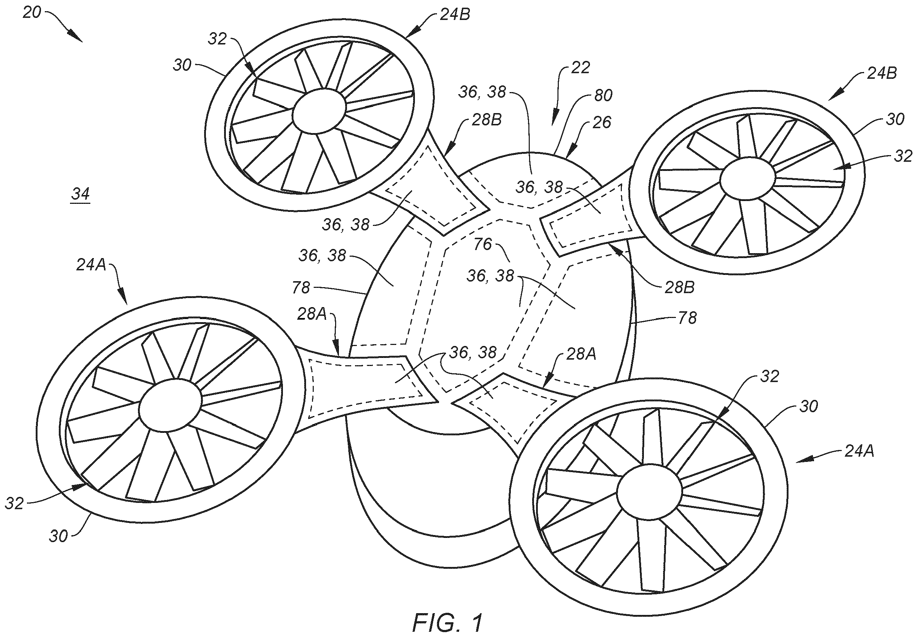

FIG. 1 illustrates an aerial vehicle 20. This aerial vehicle 20 may be configured as an advanced air mobility (AAM) vehicle (also referred to as an urban air mobility (UAM) vehicle). The aerial vehicle 20 may alternatively be configured as an unmanned aerial vehicle (UAV) (also referred to as a drone). The present disclosure, however, is not limited to such exemplary aerial vehicle configurations. The aerial vehicle 20 of FIG. 1 includes an airframe 22 and one or more propulsion units 24A and 24B (generally referred to as "24"); e.g., propulsion system modules.

The airframe 22 of FIG. 1 includes a vehicle fuselage 26 and one or more propulsion unit pylons 28A and 28B (generally referred to as "28"); e.g., propulsion unit mounting and/or support arms. The fuselage 26 forms a body of the airframe 22. The fuselage 26 may include one or more internal compartments formed by and located within the fuselage 26. Examples of the internal compartments include, but are not limited to, a cockpit, a passenger compartment and a cargo compartment.

Each pylon 28 is configured to support a respective one of the propulsion units 24. Each pylon 28 is also configured to mount the respective propulsion unit 24 to the airframe 22 and, for example, its fuselage 26. Each pylon 28 of FIG. 1, for example, projects out from the fuselage 26 to the respective propulsion unit 24. Each pylon 28 is further connected to the fuselage 26 and the respective propulsion unit 24.

The propulsion units 24 are configured to facilitate flight of the aerial vehicle 20. The propulsion units 24, more particularly, are configured to move the aerial vehicle 20 vertically and/or horizontally during aerial vehicle flight; e.g., (e.g., vertical) liftoff, climb, cruise, descent and/or (e.g., vertical) landing. Each of the propulsion units 24 of FIG. 1, for example, includes a propulsor housing 30 (e.g., a duct, a nacelle, etc.) and a bladed propulsor rotor 32 arranged within an internal flowpath of the housing 30. The propulsor rotor 32 is an air mover configured to propel air to generate, for example, aerial vehicle thrust and/or aerial vehicle lift. The propulsor rotor 32 includes a rotor base (e.g., a disk or a hub) and a plurality of propulsor rotor blades (e.g., airfoils, vanes, etc.) arranged circumferentially about and connected to the rotor base. Each propulsor rotor 32 of FIG. 1 is a ducted propulsor rotor. It is contemplated, however, one or more or all of the propulsor rotors 32 may alternatively be open propulsor rotors; e.g., un-ducted propulsor rotors. With such an arrangement, the housing 30 may provide an aerodynamic cover for a drive unit for the respective propulsion unit 24 and/or a drivetrain operatively coupling the drive unit to the propulsor rotor 32. The drive unit may be an electric motor, or any other device capable to driving rotation of the respective propulsor rotor 32 (or multiple of the propulsor rotors 32).

The propulsion units 24 may be arranged about an outer periphery of the airframe 22 and its fuselage 26. The propulsion units 24 of FIG. 1, for example, are arranged to four corners of the airframe 22 and its fuselage 26. The first (e.g., forward) propulsion units 24A of FIG. 1, in particular, are arranged at (e.g., on, adjacent or proximate) or near a longitudinal first (e.g., forward) end of the airframe 22 and its fuselage 26, where the first propulsion units 24A are further arranged to opposing lateral sides of the airframe 22 and its fuselage 26. The second (e.g., aft) propulsion units 24B of FIG. 1 are arranged at or near a longitudinal second (e.g., aft) end of the airframe 22 and its fuselage 26, where the second propulsion units 24B are further arranged to the opposing lateral sides of the airframe 22 and its fuselage 26. The present disclosure, however, is not limited to such an exemplary arrangement of propulsion units 24. For example, the propulsion units 24 may alternatively be longitudinally aligned along a span. Moreover, it is contemplated the aerial vehicle 20 may include more than or less than four (4) propulsion units 24 in other embodiments.

During operation of the aerial vehicle 20 (e.g., during aerial vehicle flight), the propulsion units 24 may generate noise; e.g., sound. This noise may be disruptive to observers (e.g., humans, wildlife, etc.) within a nearby environment 34 - the environment in which the aerial vehicle 20 is flying. This noise may also or alternatively be disruptive to occupants (e.g., a pilot, a passenger, etc.) riding within the aerial vehicle 20 and its fuselage 26. Noise may also or alternatively be generated by the flow of air along an exterior of the aerial vehicle 20 and one or more of its airframe members 26 and/or 28. This noise may be generated from flow separation and/or turbulence along one or more of the airframe members 26 and/or 28. To reduce noise disruption, the aerial vehicle 20 includes external sound attenuation. The airframe 22 of FIG. 1, for example, includes one or more acoustic panels 36 configured to attenuate (e.g., reduce) the noise generated during aerial vehicle operation.

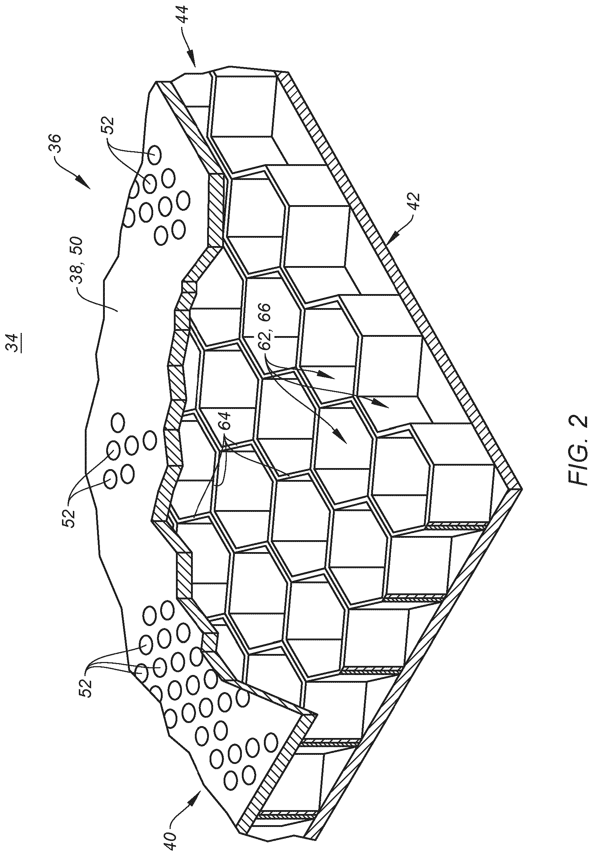

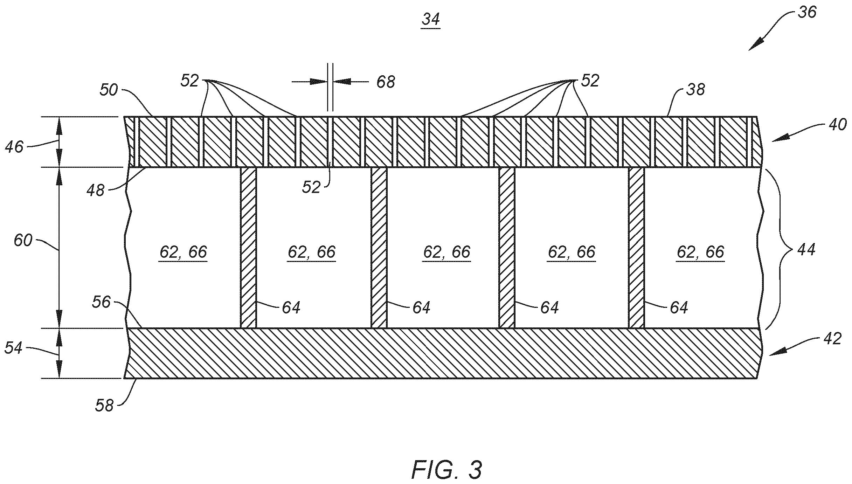

Each acoustic panel 36 may partially form the exterior of the airframe 22. Each acoustic panel 36 of FIG. 1, for example, includes and forms a respective exterior surface 38 of the airframe 22 and, for example, at least (or only) one of its airframe members; e.g., the fuselage 26 and/or a respective one of the pylons 28. Each exterior surface 38 is an exposed, outermost surface of the aerial vehicle 20 which faces and contacts the air within the external environment 34. Thus, the air outside of and flowing along the aerial vehicle 20 also flows along and contacts each exterior surface 38. Referring to FIGS. 2 and 3, each acoustic panel 36 may include a perforated face skin 40, a (e.g., non-perforated) back skin 42 and a single layer or multi-layer cellular core 44.

The face skin 40 of FIGS. 2 and 3 is configured to form the exterior surface 38 of the airframe 22 and its respective acoustic panel 36. Referring to FIG. 3, the face skin 40 may be configured as a relatively thin sheet or layer of material. This face skin material may be or otherwise include metal (e.g., sheet metal), polymer (e.g., thermoplastic or thermoset material), a fiber reinforced composite (e.g., fiber reinforcement such as, but not limited to, fiberglass fibers, carbon fibers and/or aramid fibers within a polymer matrix), or a combination thereof. The face skin 40 has a vertical thickness 46. This face skin vertical thickness 46 extends vertically between opposing surfaces 48 and 50 of the face skin 40; here, the face skin surface 50 is the same as the exterior surface 38. The face skin 40 of FIG. 3 includes a plurality of face skin perforations 52; e.g., apertures such as through-holes. Each of these face skin perforations 52 extends generally vertically through the face skin 40 between the surface 38, 50 and the face skin surface 48.

The back skin 42 may be configured as a relatively thin sheet or layer of (e.g., continuous and uninterrupted) material. This back skin material may be or otherwise include metal (e.g., sheet metal), polymer (e.g., thermoplastic or thermoset material), a fiber reinforced composite (e.g., fiber reinforcement such as, but not limited to, fiberglass fibers, carbon fibers and/or aramid fibers within a polymer matrix), or a combination thereof. The back skin material may be the same as or different than the face skin material. The back skin 42 has a vertical thickness 54. This back skin vertical thickness 54 extends vertically between opposing surfaces 56 and 58 of the back skin 42. The back skin vertical thickness 54 may be substantially equal to or different (e.g., greater or less) than the face skin vertical thickness 46.

The cellular core 44 is arranged vertically between the face skin 40 and the back skin 42. The cellular core 44 of FIG. 3, for example, extends vertically between and to the face skin 40 and the back skin 42. This cellular core 44 is also connected to the face skin 40 and/or the back skin 42. The cellular core 44, for example, may be welded, brazed, fused, adhered or otherwise bonded to the face skin 40 and/or the back skin 42. The cellular core 44 has a vertical thickness 60. This core vertical thickness 60 extends vertically between opposing sides of the cellular core 44, which core sides are respectively abutted against the face skin surface 48 and the back skin surface 56. The core vertical thickness 60 may be substantially greater than the face skin vertical thickness 46 and/or the back skin vertical thickness 54. The core vertical thickness 60, for example, may be at least five to forty times (5-40x), or more, greater than the face skin vertical thickness 46, the back skin vertical thickness 54; however, the acoustic panels 36 of the present disclosure is not limited to such an exemplary dimensional relationship.

The cellular core 44 of FIG. 3 includes a plurality of internal cavities 62. Each of these cavities 62 may extend vertically through the cellular core 44 from the face skin 40 to the back skin 42. Referring to FIG. 2, the cavities 62 may be formed within the cellular core 44 by a plurality of (e.g., corrugated) sidewalls 64 of the cellular core 44. The cellular core 44 of FIG. 2, for example, is configured as a honeycomb core. With this arrangement, each of the cavities 62 may form a respective acoustic chamber 66 (e.g., resonance cavity) within the respective acoustic panel 36 between the face skin 40 and the back skin 42. Each acoustic chamber 66 of FIG. 3 (e.g., each cavity 62) is fluidly coupled with one or more of the face skin perforations 52. The face skin perforations 52 may thereby fluidly couple the acoustic chambers 66 to the external environment 34. The present disclosure, however, is not limited to such an exemplary cellular core arrangement. Moreover, while the acoustic panel 36 of FIGS. 2 and 3 is shown as a single degree of freedom (SDOF) acoustic panel, one or more of the acoustic panels 36 may alternatively be configured as a multi-degrees of freedom (MDOF) acoustic panel. One or more of the acoustic chambers 66, for example, may be divided into two or more sub-chambers by one or more perforated septums.

The cellular core 44 may be constructed from or otherwise include metal (e.g., sheet metal), polymer (e.g., thermoplastic or thermoset material), a fiber reinforced composite (e.g., fiber reinforcement such as, but not limited to, fiberglass fibers, carbon fibers and/or aramid fibers within a polymer matrix), or a combination thereof. This cellular core material may be the same as or different than the face skin material and/or the back skin material.

Each face skin perforation 52 has a lateral width 68; e.g., a diameter. This face skin perforation width 68 may be measured perpendicular to a centerline of the respective face skin perforation 52. The face skin perforation width 68 may also be uniform (e.g., constant) along the centerline between the face skin surfaces 48 and 50. To reduce aerodynamic drag along the exterior surface 38 and/or lower energy consumption by the respective acoustic panel 36, the face skin perforation width 68 of one or more or all of the face skin perforations 52 may be sized to be equal to or less than 0.050 inches (1.27mm). The face skin perforation width 68 of one or more or all of the face skin perforations 52, for example, may be equal to or less than 0.025 inches (0.635mm), but greater than 0.003 inches (0.0762mm); e.g., between 0.003 inches (0.0762mm) and 0.008 inches (0.2032mm) (e.g., laser micro-perforation size), between 0.008 inches (0.2032mm) and 0.010 inches (0.254mm), between 0.010 inches (0.254mm) and 0.025 inches (0.635mm) (e.g., small M-drill or laser perforation size). Configuring the face skin 40 with micro-perforations - the relatively small face skin perforations 52 - may also provide the respective acoustic panel 36 with linear acoustic properties. These face skin perforations 52 may be formed using various manufacturing techniques including, but not limited to, utilizing an ultra-short pulse laser machining technique.

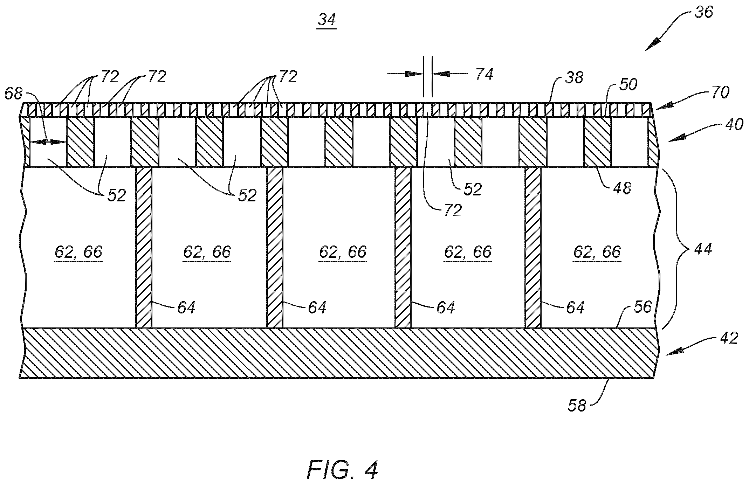

In some embodiments, referring to FIG. 4, the face skin 40 may alternatively be functionally provided with micro-perforations utilizing a perforated film 70 (e.g., a microperforated film) rather than forming the micro-perforations in the face skin 40 itself. The perforated film 70 of FIG. 4, for example, is overlaid onto and is bonded (e.g., adhered) to the face skin 40. The perforated film 70 may at least partially or completely cover the face skin 40 and its face skin surface 50. With this arrangement, the perforated film 70 of FIG. 4 partially or completely forms the exterior surface 38 of the respective acoustic panel 36. The perforated film 70 may thereby provide a protective layer between the external environment 34 and the face skin 40; e.g., the perforated film 70 is a protective film for the face skin 40. The perforated film 70 may be constructed from or otherwise include a polymeric material. This polymeric material may be polyurethane (PU) or a combination of tetrafluoroethylene, hexafluoropropylene and vinylidene fluoride (THV). The present disclosure, however, is not limited to the foregoing exemplary polymeric materials.

The perforated film 70 of FIG. 4 includes a plurality of film perforations 72; e.g., apertures such as through-holes. Each of these film perforations 72 extends generally vertically through the perforated film 70 between opposing sides of the perforated film 70. Each film perforation 72 has a lateral width 74; e.g., a diameter. This film perforation width 74 may be measured perpendicular to a centerline of the respective film perforation 72. The film perforation width 74 may also be uniform (e.g., constant) along the centerline between the opposing sides of the perforated film 70. For similar reasons as described above, the film perforation width 74 of one or more or all of the film perforations 72 may be sized to be equal to or less than 0.050 inches (1.27mm). The film perforation width 74 of one or more or all of the film perforations 72, for example, may be equal to or less than 0.025 inches (0.635mm), but greater than 0.003 inches (0.0762mm); e.g., between 0.003 inches (0.0762mm) and 0.008 inches (0.2032mm), between 0.008 inches (0.2032mm) and 0.010 inches (0.254mm), between 0.010 inches (0.254mm) and 0.025 inches (0.635mm). These film perforations 72 may be formed using various manufacturing techniques including, but not limited to, laser perforation and/or mechanical drilling.

Since the perforated film 70 of FIG. 4 is configured with the micro-perforations, the face skin perforations 52 may be resized (e.g., enlarged) to facilitate faster and/or less expensive manufacture. The face skin perforation width 68 of one or more or all of the face skin perforations 52 of FIG. 4, for example, may be sized to be between 0.03 inches (0.0762 cm) and 0.06 inches (0.1524 cm); e.g., 0.04 inches (0.1016 cm) and 0.045 inches (0.1143 cm). With this arrangement, each face skin perforation 52 may be laterally aligned with (e.g., overlap) and may be fluidly coupled with one or more of the film perforations 72. Each face skin perforation 52 of FIG. 4 may thereby fluidly couple multiple of the film perforations 72 to a respective one of the acoustic chambers 66. Thus, the combination of the perforated film 70 and the face skin 40 of FIG. 4 may be functionally similar to the face skin 40 of FIG. 3. However, as described above, including the perforated film 70 provides an added benefit of protection for the face skin 40. Characteristics of the perforated film 70 may in-and-of- itself provide enhance sound attenuation. The perforated film 70 may also enhance an appearance of the acoustic panel 36. The perforated film 70, for example, may be colored, patterned and/or produced with graphics to provide a stylized exterior surface 38.

Referring to FIG. 1, one of the acoustic panels 36 and its exterior surface 38 may be arranged at a (e.g., gravitational) top 76 of the airframe 22 and its fuselage 26. One of the acoustic panels 36 and its exterior surface 38 may also or alternatively be arranged at a respective side 78 of the airframe 22 and its fuselage 26. One of the acoustic panels 36 and its exterior surface 38 may still also or alternatively be arranged at a respective end 80 of the airframe 22 and its fuselage 26. The present disclosure, however, is not limited to exemplary acoustic panel locations shown in FIG. 1.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An aerial vehicle, comprising:
a propulsion unit (24); and
an airframe (22) including a fuselage (26), a pylon (28) and an acoustic panel (36), the pylon (28) mounting the propulsion unit (24) to the fuselage (26), and the acoustic panel (36) forming an exterior surface (38) of the airframe (22), the acoustic panel (36) configured to attenuate sound propagating outside of the aerial vehicle (20).

2. The aerial vehicle of claim 1, wherein the aerial vehicle (20) is configured as an advanced air mobility vehicle and/or wherein the aerial vehicle (20) is configured as an unmanned aerial vehicle (20).

3. The aerial vehicle of claim 1 or 2, wherein the fuselage (26) comprises the acoustic panel (36).

4. The aerial vehicle of any preceding claim, wherein the exterior surface (38) is arranged at a top (76) of the fuselage (26).

5. The aerial vehicle of any preceding claim, wherein the exterior surface (38) is arranged at a side (78) and/or an end of the fuselage (26).

6. The aerial vehicle of any preceding claim, wherein the pylon (28) comprises the acoustic panel (36).

7. The aerial vehicle of any preceding claim, wherein:
the acoustic panel (36) includes a face skin (40), a back skin (42) and a cellular core (44) between the face skin (40) and the back skin (42); and
the face skin (40) includes a plurality of face skin perforations (52) which extend through the face skin (40) and are fluidly coupled with a plurality of cavities (62) within the cellular core (44), optionally wherein the face skin (40) forms the exterior surface (38) of the airframe (22).

8. The aerial vehicle of claim 7, wherein:
the plurality of face skin perforations (52) comprise a first face skin perforation; and
the first face skin perforation has a width less than 0.015 inches (0.381mm).

9. The aerial vehicle of claim 7 or 8, wherein:
the acoustic panel (36) further includes a film (70) over the face skin (40);
the film (70) includes a plurality of film perforations (72) which extend through the film (70), and the plurality of film perforations (72) comprises a first film perforation;
the plurality of cavities (62) comprise a first cavity; and
the plurality of face skin perforations (52) comprise a or the first face skin perforation, and the first face skin perforation fluidly couples the first film perforation to the first cavity.

10. The aerial vehicle of claim 9, wherein:
the plurality of film perforations (72) further comprises a second film perforation and the first face skin perforation further fluidly couples the second film perforation to the first cavity; and/or
the first film perforation has a width less than 0.015 inches (0.381mm).

11. The aerial vehicle of claim 9 or 10, wherein the film (70) comprises polyurethane and/or wherein the film (70) includes tetrafluoroethylene, hexafluoropropylene and vinylidene fluoride.

12. The aerial vehicle of any of claims 8 to 11, wherein the first face skin perforation has a width between 0.02 inches (0.508mm) and 0.06 inches (1.524mm).

13. An aerial vehicle, comprising:
a propulsion unit (24); and
an airframe (22) including a fuselage (26) and a pylon (28);
the fuselage (26) comprising an acoustic panel (36) forming an exterior surface (38) of the fuselage (26), and the acoustic panel (36) configured to attenuate sound propagating outside of the aerial vehicle (20); and
the pylon (28) mounting the propulsion unit (24) to the airframe (22).

14. An aerial vehicle, comprising:
a propulsion unit (24); and
an airframe (22) including a fuselage (26), a pylon (28) and a protective film (70) forming an exterior surface (38) of the airframe (22), the protective film (70) comprising:
polyurethane; or
tetrafluoroethylene, hexafluoropropylene and vinylidene fluoride;
the pylon (28) mounting the propulsion unit (24) to the airframe (22).

15. The aerial vehicle of claim 14, wherein
the protective film (70) comprises a plurality of film perforations (72) which extend through the protective film (70), and the plurality of film perforations (72) comprises a first film perforation, and the first film perforation has a width less than 0.015 inches (0.381mm); and/or
the airframe (22) further includes an acoustic panel (36), and the acoustic panel (36) comprises the protective film (70).
